# EUROPEAN PATENT SPECIFICATION

(11) **EP 2 026 911 B1**
(45) Date of publication and mention of the grant of the patent: **01.12.2010**
(21) Application number: 06728494.3
(22) Date of filing: 16.03.2006
(51) Int. Cl.: B05D 1/02

(54) **PLANT FOR THE DYE RECOVERY DURING THE FLAMING**
ANLAGE ZUR FARBSTOFFRÜCKGEWINNUNG BEIM ABFLAMMEN
INSTALLATION DE RECUPERATION DE TEINTURE AU COURS DU FLAMMAGE

(43) Date of publication of application: 25.02.2009
(73) Proprietor: Usai, Giacomo, 41040 Spezzano di Fiorano (Modena) (IT)
(72) Inventor: Usai, Giacomo, 41040 Spezzano di Fiorano (Modena) (IT)
(74) Representative: Paolini, Elena
(86) International application number: PCT/IT2006/000162
(87) International publication number: WO 2007/066366

(56) References cited:
- EP-A- 1 334 773
- US-A- 3 434 865

## Description

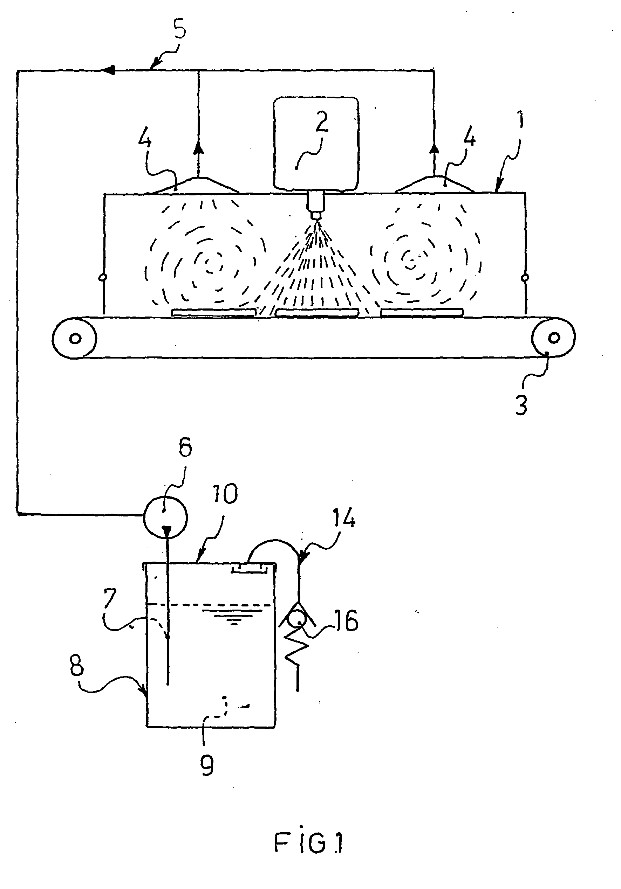

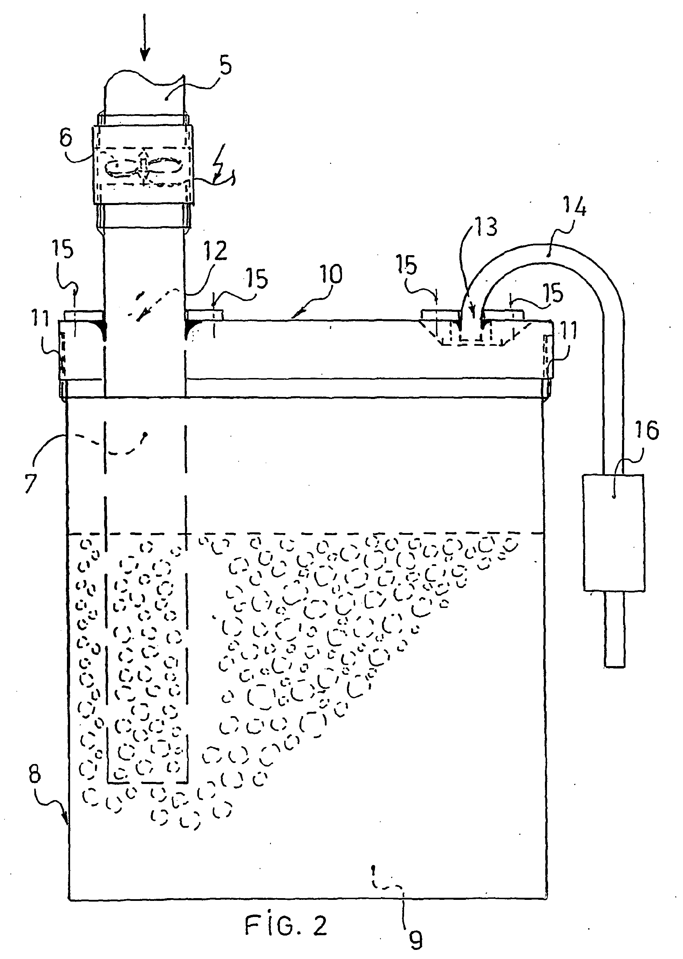

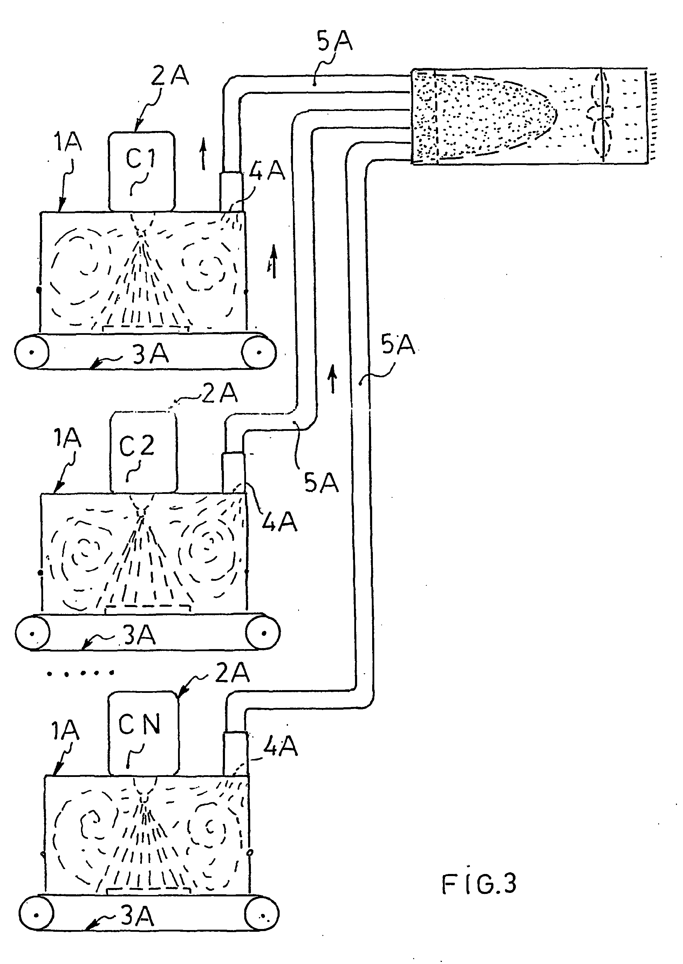

It is known that the ceramic colouring processes are used in the industries of this sector for the different colourings of a product or for different colourings of the same product. In a specific department, known as enamel factory, it is actuated what in technical way is called flaming, i.e. the colouring of the ceramic product by means of airbrush. During the flaming the airbrush is filled with ceramic dusts and dyes in water solution to be atomized onto the ceramic product. The tiles, or each other ceramic products, are placed onto a belt conveyor and they are painted during the transport onto the moving element. This phase is effected in a closed chamber to avoid the dispersion of the very expensive ceramic dye and the atomized residuals not used, sprayed to the airbrush, are sucked up from the closed chamber so to have not a dispersion in the working room. Currently the intake of the ceramic dye residuals is actuated picking the ceramic dusts and the colourings of different colour coming to the different closed chambers onto corresponding belt conveyors by means of pipes and by a centralized intake plant with conic net filter onto which the ceramic dusts are collected with dyes in water solution. To intake different dyes and put them in a sole filter in the plants currently in used creates a lot of problems. The obtained filter, generally of colour verges on black for the sum of the different colours, has high costs of disposal. Moreover, the residuals of the dyes are irremediably lost such as they are not reused in the productive process. Apparatuses are known, as for instance the apparatus described in the document US-A-3 434 865 and the apparatus described in the document EP-A-1 334 773. US-A-3 434 865 describes and shows a process for making the surface of material whereas EP-A-1 334 773 describes an apparatus for applying powder enamel to tiles.The invention according to claim 1 refers to a new plant for the dye recovery that permits to avoid the cost of disposal of the filters with the sucked dusts and it permits a reusing of the dye ceramic residuals. The invention provides the presence of a containment chamber 1 for each used dye. The invented plant is illustrated in a merely indicative and not limiting way in the drawings 1, 2 and 3. Figure 1 is the schematic view of the invented plant. In figure 2 is represented the container 8 with the pipes and the connected devices. In figure 3 is represented a plant according to the prior art. These old plant is shown to better point out the innovations introduced with the invented plant. In particular said view shows different containment chamber 1A for different dyes C1, C2 ....Cn. used to the correspondence airbrushes 2A used for dyeing ceramic products placed on the belt conveyors 3A with openings 4A and with pipes 5A connected with a sole centralized filter equipped with a sucking device. The containment chamber for the used dye provides, like in the conventional plant, an airbrush 2. Said chamber 1 is placed in covering of the belt conveyor 3. It is important in the application to provide for each used dye and in biunique correspondence an invented plant for the dye recovery. The containment chamber 1 provides opening or openings 4 connected to a piping 5 for permitting the sucking of the residuals of atomized or not dyes. The piping 5 is connected to a sucking device 6. Said sucking device 6 is then connected to another pipe 7, present inside a container 8 filled with liquid 9. In the main version said liquid 9 contained inside the container 8 is water, if it is provided the sucking of ceramic dusts with dyes inside water solution, but it can be provided, in other versions, different kind of solvents. Infact, it is necessary that the kind of used solvent for ceramics dusts and for the dyes inside the airbrush was of the same type of that inside the container 8. The invention, moreover, provides a containment cover 10 fixed to the container 8 with connecting means 11 to be opened. The containment cover 10 provides openings 12 and 13 for the passage of the pipe 7 inside the container 8 and for the connection of an air bleeder 14. The pipe 7 and the air bleeder 14 are kept in stable position onto the cover 10 by means of connecting means 15 to be opened. The air bleeder then provides, at the exhaust, a no-return valve 16, so to avoid the inlet of polluting substances inside the container 8 and to discharge outside high pressures of the air present inside the container. In working phase the invented plant provides the sucking of the no-used dye residuals to colour the ceramic product through the openings 4 and by means of the piping 5 with the flow put in motion by the sucking device 6. The flow of the ceramic dusts and atomized dyes and not used in the colouring is so pushed to the sucking device 6 inside the liquid 9 by means of the pipe 7. Passing into the container 8, that forms a liquid filter, the ceramic dusts and the dye remain caught inside the liquid 9, whereas the excess air is discharged by means of the air bleeder 14. The no-return valve 16 permits the passing of the air only to outside not permitting to other substances to enter inside the container 8 and in the liquid 9. The density of dye and ceramic dusts presents inside the liquid 9 is increased with the use of the invented plant. With a density near or equal to the used dye to the airbrush, the liquid 9 with the ceramic dusts and the dye, by previous an eventual settling, can be used to the airbrush. It is, moreover, possible added small quantity of dyes and/or ceramic dusts to the settled liquid 9 to have a product to use with the airbrush with the same chemical-physical characteristics of the product used in the first laying of colour to the ceramic product. So it is not more necessary the costs for the disposal of the filters with the ceramic dusts and the different dyes used in the plant previous to the invented plant, other of course to determine with the present invention the recovery of the very cost ceramic dusts with dye.

## Claims

1. Plant for the dye recovering during the process of flaming of ceramics products comprising:
a containment chamber (1) for each dye colour used, said containment chamber (1) covering the ceramic product to be treaded, and including an airbrush (2), as well opening or openings (4) connected to a piping (5);
a sucking device (6) having a pipe (7) and being connected to said piping (5); **characterized in that** the plant also comprises a liquid filter having a container (8) filled with liquid (9) in which said pipe (7) is inserted;
wherein the residuals of the atomized dye not used are sucked through said opening or openings (4) and through said piping (5), and pushed through said pipe (7) into the liquid (9) of said filter by the sucking device (6).

2. Plant for the dye recovering during the process of flaming of ceramics products, as for claim 1, **characterized in that** said container (8) comprises an air bleeder (14) provided at the exhaust with a no-return valve (16).

## Patentansprüche

1. Anlage zur Farbstoffrückgewinnung beim Abflammen von Keramikprodukten inklusive eines Behaltungsraums (1) für jeden gebrauchten Farbstoff, und dieses Behaltungsraum (1) verkleidende das Keramikprodukt zu bearbeiten, und einschliessende eine Spritzpistole (2), so wie an Leitung (5) zusammengefügte Öffnung oder Öffnungen (4), eine Lüftungsvorrichtung (6) mit einer Leitung (7) und an die Leitung (5) zusammengefügt; **dadurch gekennzeichnet, dass** die Anlage auch einen Flüssigfilter mit einem Flüssigkeit (9) gefülltem Behälter (8) einschliesst, in der diese Leitung (7) eingesteckt ist; in der die nicht verwerteten zerstäubten Farbstoffresiduen durch diese Öffnung oder Öffnungen (4) und durch diese Leitung (5) angesaugt werden, und durch diese Leitung (7) innern der Flüssigkeit (9) dieses Filters durch eine Lüftungsvorrichtung (6) hineingeschoben werden.

2. Anlage zur Farbstoffrückgewinnung beim Abflammen von Keramikprodukten, wie in Patentanspruch 1, **dadurch gekennzeichnet, dass** der Behälter (8) ein Luftloch (14) für die Entleerung mit einem einseitigen Ventil hat.

## Revendications

1. Installation de récuperation de teinture au cours due flammage de produits céramiques incluant une chambre de retenu (1) pour chaque teinture employee, dite chambre de retenu (1) couvrant le produit céramique à être traité, et incluant un aérographe (2) aussi que une ouverture ou des ouvertures (4) connectées à une canalisation (5), un dispositif d'aspiration (6) possédant des tuyeaux (7) et étant connecté à la canalisation (5) ; **caractérisée** du fait que l'installation est douée aussi d'un filtre au liquide (9) ayant un récipient (8) rempli de liquide (9) où sont inserés dits tuyeaux (7) où les residus de la teinture atomisée qui n'a pas été utilisée, sont axpirés à travers dite ouverture au des ouvertures (4) et passant le long de la canalisation (5) et poussés traversant dits tuyeaux (7) à l'intérieur du liquide (9) de dit filtre grâce ù un dispositif d'aspiration (6).

2. Installation de récuperation de teinture au cours due flammage de produits céramiques, selon la revendication 1, **caractérisée** du fait que dit récipient posséde un reniflaud (14) prevu au déchargement avec une valve à cul de sac.
